(19) Europäisches Patentamt
European Patent Office
Office européen des brevets

(11) EP 4 308 648 B1

(12) EUROPEAN PATENT SPECIFICATION

(45) Date of publication and mention of the grant of the patent:
**25.12.2024 Bulletin 2024/52**

(21) Application number: **22714433.4**

(22) Date of filing: **15.03.2022**

(51) International Patent Classification (IPC):
***C08L 25/12*** (2006.01) ***C08L 55/02*** (2006.01)
***C08L 27/16*** (2006.01) ***C25D 3/00*** (2006.01)
*C08F 279/04* (2006.01) *C08F 6/18* (2006.01)

(52) Cooperative Patent Classification (CPC):
(C-Sets available)
**C08F 279/04; C08F 6/18; C08L 25/12; C25D 3/04; C25D 3/12; C25D 3/38; C25D 3/48; C25D 3/50; C25D 5/56;** C23C 18/1653; C23C 18/2086; C23C 18/22; C23C 18/28; C23C 18/32; C23C 18/38

(Cont.)

(86) International application number:
**PCT/EP2022/056606**

(87) International publication number:
**WO 2022/194814 (22.09.2022 Gazette 2022/38)**

(54) **ABS MOLDING COMPOSITION WITH IMPROVED SURFACE QUALITY FOR PLATING APPLICATIONS**

ABS-FORMMASSE MIT VERBESSERTER OBERFLÄCHENQUALITÄT FÜR PLATTIERUNGSANWENDUNGEN

COMPOSITION DE MOULAGE ABS PRÉSENTANT UNE QUALITÉ DE SURFACE AMÉLIORÉE POUR DES APPLICATIONS DE PLACAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2021 EP 21162893**

(43) Date of publication of application:
**24.01.2024 Bulletin 2024/04**

(73) Proprietor: **INEOS Styrolution Group GmbH**
**60325 Frankfurt (DE)**

(72) Inventors:
- **NIESSNER, Norbert**
  **67159 Friedelsheim (DE)**
- **MICHELS, Gisbert**
  **51375 Leverkusen (DE)**
- **MADHAV, Shridhar**
  **Vadodara 390 002 (IN)**
- **AK, Manjula**
  **Vadodara, Gujarat 391 740 (IN)**
- **GEVARIA, Kirit**
  **Vadodara 390 008 (IN)**
- **BHARADWAJ, Pankaj**
  **Nath Pin-262 802 (IN)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**EP-A1- 3 480 252**
**WO-A1-2014/187803**
**CN-A- 104 893 283**
**KR-A- 20200 042 184**
**US-A1- 2020 148 876**
**US-B1- 6 734 252**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 308 648 B1

(52) Cooperative Patent Classification (CPC): (Cont.)

C-Sets
**C08F 6/18, C08L 25/12;**
**C08L 25/12, C08L 55/02, C08L 27/16;**
**C08L 25/12, C08L 55/02, C08L 27/20**

## Description

The invention relates to ABS molding compositions that exhibit improved surface quality along with good mechanical properties and high chemical resistance, a process for its preparation and its use for post treatments like painting or (electro) plating.

Acrylonitrile Butadiene Styrene (ABS) molding compositions are widely used in both automotive and household sectors for its characteristic features like good aesthetics, dimensional stability, impact strength well balanced mechanical properties, chemical resistance and ease of processing.

One unique feature of ABS plastics or parts molded from ABS is that they are suitable substrates for secondary treatments (prettifications) like painting and (electro) plating. Other general-purpose thermoplastics used in similar applications require extensive pretreatment of the surface. ABS is a copolymer of acrylonitrile, butadiene and styrene produced world-wide at a large extent. The elastomeric part, a polybutadiene-rubber, is responsible for the good impact strength of the material. Moreover, this component has significance for easy application of paints or plating. The advantage of butadiene as component of the substrate matrix is that, it can be selectively etched/treated with appropriate solvents or acids.

The parts, which are painted or plated, find their use in both automotive and household sectors. ABS plastics used for automotive exterior applications are preferably painted. Painting efficiently gives protection against material deterioration due to exposure to sunlight along with enhancing the aesthetics.

Some molded parts are metallized (plated) with specific metals, e.g. nickel, copper, platinum, chromium or gold. Such plated parts give a premium touch to the overall look of the parts and equipment. These plated parts now become essential in both automobile and electronic equipment in the premium range. The plating process as such is critical and comprises a number of steps. Slight variation in any of the process parameters in any one of the process steps has the potential to cause serious defects on the plating layer. However, defects of the substrate molded parts also accounts for a good percentage of total defects after plating.

Common and exasperating defects observed on the plated parts are called pit marks. Defect percentage due to pit marks sometimes account for more than half of the total defects of the plating site. The whole plated part is rejected due to this minor defect as the electroplated parts are always placed on the equipment in such locations that are easily noticed. Plated parts are introduced into or used in the equipment to enhance e.g. its aesthetics. Therefore, these kinds of defects make the product less attractive.

There is a need for an improved ABS material having or leading to a minimum of defects in the molded article, like foreign particles, gels, bigger size particles, salt inclusions etc., because any defects will be increased and more pronounced as pin holes/pit marks after (electro)plating processes.

US 2015/0368463 describes a process for producing thermoplastic compositions, comprising ABS graft copolymers obtained by emulsion polymerization and comprising production-related salt inclusions. Said compositions, such a polycarbonate-ABS blends are characterized by an improved surface quality once the extruded polymer has been moistened by bringing the polymer in contact with water, thus making the compositions suitable for producing molded articles having a class A surface which then can be painted or metallized via electroplating.

US 10,731,031 of INEOS Styrolution relates to a process for producing thermoplastic molding materials based on ABS having improved surface properties. In the production of ABS graft copolymers a fluid bed dryer and/or a flash dryer is used which reduces salt inclusions and results in an improved the surface quality.

CN-A 106189047 (2016) discloses a high-surface-smoothness ABS material made from 85 to 90 pbw (parts by weight) of ABS resin, 5 to 10 pbw of styrene-acrylonitrile (SAN) copolymer, 3 to 6 pbw of toughener (butadiene-based terpolymer) and 0.3 to 0.8 pbw antioxidant.

CN-A 103333456 (2013) relates to a heat-resistant ABS resin with an excellent blow molding surface comprising 20 to 80 pbw ABS rubber powder, 20 to 80 pbw SAN copolymer, 1 to 20 pbw melt reinforcing agent (e.g. acrylate-, styrene-maleic anhydride-, or SAN-glycidyl methacrylate copolymer) , 5 to 25 part of heat-resisting agent (e.g. NPMI) and 0.1 to 1 pbw antioxidant.

WO2016/184765 of INEOS Styrolution teaches an ABS composition and shaped articles thereof having balanced properties and superior surface quality wherein ABS graft rubber copolymers P-I and P-II of different particle size are mixed up and co-precipitated. Exemplified compositions comprise 30 or 40 pbw graft copolymers P-I and P-II, 70 or 60 pbw SAN copolymer, 2 pbw EBS, 0.3 pbw Mg stearate, 0.15 pbw poly dimethylsiloxane (1000 cSt).

WO 2020/064594 of INEOS Styrolution discloses a heat resistant, low-odor ABS molding composition for automotive interior applications comprising 15 to 44.2 wt.-% ABS graft copolymer (A); 55 to 84.2 wt.-% SAN matrix copolymer (B); 0.65 to 1.20 wt.-% fatty acid amide, 0.05 to 0.30 wt.-% MgO, CaO or ZnO, 0.05 to 0.80 wt.-% antioxidant and 0.05 to 0.30 wt.-% silicon oil (kinematic viscosity 25000 to 80000 cSt). The reference is silent about surface defects and plating of the shaped articles.

US 6,734,252 (2004) discloses a melt processable thermoplastic composition having an improved melt processability and reduced melt defects such as shark skin. The composition comprises a thermoplastic hydrocarbon polymer,

in particular a polyolefin (e.g. LLDPE) and a polymer processing additive based on a fluorothermoplastic polymer, in particular a terpolymer of VDF, tetrafluoroethylene (TFE) and HFP.

EP-A 1462483 describes a process aid masterbatch comprising a fluoropolymer (examples: VDF-HFP-copolymer); an organic soap (e.g. Zn/Ca/Mg-stearate) and a non-fluorinated melt-processable polymer for improving the extrusion processability (increased extrusion rate while producing articles having smooth surfaces) of non-fluorinated melt-processable polymers. The non-fluorinated melt-processable polymer is in particular a polyolefin such as LLDPE. Blown films were produced from extrudable compositions comprising LLDPE and said masterbatch.

US 2010/0204375 and US 2010/0298487 disclose a processing aid (extrusion agent) based on a copolymer of vinylidene fluoride (VDF) which is used to reduce surface defects that appear during extrusion - in particular of films obtained by extrusion blow molding - of thermoplastic resins , preferably polyolefins, styrene resins, polyesters and PVC, in particular polyolefins. All examples show extruded mixtures of 98 wt.-% HDPE and 2 wt.-% of an extrusion agent masterbatch (5 wt.-% VDF-hexafluoropropylene (HFP)-copolymer (10 wt.-% HFP) and 95 wt.-% LLDPE), and blow-molded films (US 2010/0298487 A1) made from LLDPE and said masterbatch.

The known ABS compositions and materials are often not satisfying for secondary treatments like metallization through plating, electroplating or painting, which require a minimum (or zero) number of surface defects, especially pit marks.

Thus, in the market there is a need of improved ABS resin compositions and products which perform exceptionally well in (electro) plating or painting processes.

It is an object of the invention to provide an ABS thermoplastic molding composition and parts therefrom, having superior (smooth and homogenous) surface quality in terms of surface defects (reduced surface pitting, reduced hard spots, or inhomogeneity) after molding which can be used for secondary (post) treatments like metallization through plating or painting, especially plating. A further object of the invention is to provide shaped articles made from said ABS composition which after said post treatments have a reduced defect fraction (number of pit marks) on their surface.

One aspect of the invention is a thermoplastic molding composition comprising (or consisting of) components A, B, C and D:

(A) 15 to 44.975 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%,

obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 150 to 800 nm,
where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 55 to 84.975 wt.-% of at least one copolymer (B) of styrene and acrylonitrile or of alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene;
wherein copolymer (B) has a weight average molar mass $M_w$ of 85,000 to 190,000 g/mol, preferably 90,000 to 160,000 g/mol, more preferably 110,000 to 140,000 g/mol;

(C) 0.015 to 0.40 wt.-%, preferably 0.04 to 0.30 wt.-%, more preferably 0.05 to 0.21 wt.-%, of at least one vinylidene fluoride copolymer (C);

(D) 0.01 to 5 wt.-%, preferably 0.05 to 3 wt.-%, more preferably 0.50 to 2.5 wt.-%, of at least one further additive/processing aid (D) different from (C),

where components A, B, C, and D sum to 100 wt.-%.

Wt.-% means percent by weight. The term "diene" means a conjugated diene; "butadiene" means 1,3-butadiene.

The median weight particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value. In the present application the weight-average particle diameter $D_w$, in particular the median weight particle diameter $D_{50}$, is determined with a disc centrifuge (e.g.: CPS Instruments Inc.

DC 24000 with a disc rotational speed of 24000 rpm).

The weight-average particle diameter $D_w$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum} ( n_i * d_i^4 ) / \text{sum}( n_i * d_i^3 )$$

where $n_i$: number of particles of diameter $d_i$.

The summation is performed from the smallest to largest diameter of the particles size distribution. It should be mentioned that for a particles size distribution of particles with the same density which is the case for the starting rubber latices and agglomerated rubber latices the volume average particle size diameter Dv is often close or equal to the weight average particle size diameter Dw.

The weight average molar mass $M_w$ is determined by GPC (solvent: tetrahydrofuran, polystyrene as polymer standard) with UV detection according to DIN 55672-1:2016-03.

In the context of the present invention, the structural units of a monomer in a (co)polymer are understood to be the structural units derived from the monomer that has been polymerized.

Preferably the thermoplastic molding composition comprises (or consists of):

20 to 39.91 wt.-% component (A);
60 to 79.91 wt.-% component (B);
0.04 to 0.30 wt.-% component (C);
0.05 to 3 wt.-% component (D).

More preferred the thermoplastic molding composition comprises (or consists of):

25 to 34.45 wt.-% component (A);
65 to 74.45 wt.-% component (B);
0.05 to 0.21 wt.-% component (C);
0.50 to 2.50 wt.-% component (D).

Component (A)

Graft copolymer (A) (component (A)) is known and described e.g. in WO 2012/022710, WO 2014/170406 and WO 2014/170407.

Graft copolymer (A) consists of 15 to 60 wt.-% of a graft sheath (A2) and 40 to 85 wt.-% of a graft substrate - an agglomerated butadiene rubber latex - (A1), where (A1) and (A2) sum up to 100 wt.-%.

Preferably graft copolymer (A) is obtained by emulsion polymerization of styrene and acrylonitrile in a weight ratio of 80:20 to 65:35, preferably 74:26 to 70:30, to obtain a graft sheath (A2), it being possible for styrene and/or acrylonitrile to be replaced partially (less than 50 wt.-%, preferably less than 20 wt.-%, more preferably less than 10 wt.-%, based on the total amount of monomers used for the preparation of (A2)) by alpha-methylstyrene, methyl methacrylate or maleic anhydride or mixtures thereof, in the presence of at least one agglomerated butadiene rubber latex (A1) with a median weight particle diameter $D_{50}$ of 150 to 800 nm, preferably 180 to 700 nm, more preferably 200 to 600 nm, most preferred 250 to 500 nm, in particular preferred 300 to 400 nm.

Preferably at least one, preferably one, graft copolymer (A) consists of 20 to 50 wt.-% of a graft sheath (A2) and 50 to 80 wt.-% of a graft substrate (A1).

More preferably graft copolymer (A) consists of 30 to 45 wt.-% of a graft sheath (A2) and 55 to 70 wt.-% of a graft substrate (A1).

Often graft copolymer (A) consists of 35 to 45 wt.-% of a graft sheath (A2) and 55 to 65 wt.-% of a graft substrate (A1).

Preferably the obtained graft copolymer (A) has a core-shell-structure; the graft substrate (A1) forms the core and the graft sheath (A2) forms the shell.

Preferably for the preparation of the graft sheath (A2) styrene and acrylonitrile are not partially replaced by one of the above-mentioned co-monomers; preferably styrene and acrylonitrile are polymerized alone in a weight ratio of 95:5 to 65:35, preferably 80:20 to 65:35, more preferably 74:26 to 70:30.

The agglomerated rubber latex (A1) may be obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic

acid, in particular acetic anhydride, or alternatively, by agglomeration with a dispersion of an acrylate copolymer.

The at least one, preferably one, starting butadiene rubber latex (S-A1) preferably has a median weight particle diameter $D_{50}$ of equal to or less than 110 nm, particularly equal to or less than 87 nm.

The term "butadiene rubber latex" means polybutadiene latices produced by emulsion polymerization of butadiene and less than 50 wt.-% (based on the total amount of monomers used for the production of polybutadiene polymers) of one or more monomers that are copolymerizable with butadiene, as co-monomers.

Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 30 wt.-%, preferably up to 20 wt.-%, more preferably up to 15 wt.-% styrene and/or acrylonitrile, preferably styrene.

Preferably, the starting butadiene rubber latex (S-A1) consists of 70 to 99 wt.-% of butadiene and 1 to 30 wt.-% styrene. More preferably the starting butadiene rubber latex (S-A1) consists of 85 to 99 wt.-% of butadiene and 1 to 15 wt.-% styrene. Often, the starting butadiene rubber latex (S-A1) consists of 85 to 95 wt.-% of butadiene and 5 to 15 wt.-% styrene.

The agglomerated rubber latex (graft substrate) (A1) may be obtained by agglomeration of the above-mentioned starting butadiene rubber latex (S-A1) with at least one acid anhydride, preferably acetic anhydride or mixtures of acetic anhydride with acetic acid, in particular acetic anhydride. The preparation of graft copolymer (A) by emulsion polymerization is described in detail in WO 2012/022710. Preferably for the emulsion polymerization process a plant based, in particular a rosin acid-based emulsifier, is used.

Graft copolymer (A) can be prepared by a process comprising the steps: $\alpha$) synthesis of starting butadiene rubber latex (S-A1) by emulsion polymerization, $\beta$) agglomeration of latex (S-A1) to obtain the agglomerated butadiene rubber latex (A1) and $\gamma$) grafting of the agglomerated butadiene rubber latex (A1) to form a graft copolymer (A).

The synthesis (step $\alpha$)) of starting butadiene rubber latices (S-A1) is described in detail on pages 5 to 8 of WO 2012/022710. Preferably the starting butadiene rubber latices (S-A1) are produced by an emulsion polymerization process using metal salts, in particular persulfates (e.g. potassium persulfate), as an initiator and a rosin-acid based emulsifier.

As rosin acid-based emulsifiers, those are being used in particular for the production of the starting rubber latices by emulsion polymerization that contain alkaline salts of the rosin acids. Salts of the rosin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%. Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the production of the starting rubber latices. The use of alkaline soaps as sodium or potassium salts from disproportionated and/or dehydrated and/or hydrated and/or partially hydrated gum rosin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm (median weight particle diameter $D_{50}$).

Polymerization temperature in the preparation of the starting rubber latices (S-A1) is generally 25°C to 160°C, preferably 40°C to 90°C. Further details to the addition of the monomers, the emulsifier and the initiator are described in WO 2012/022710. Molecular weight regulators, salts, acids and bases can be used as described in WO 2012/022710.

Then the obtained starting butadiene rubber latex (S-A1) is subjected to agglomeration (step $\beta$) to obtain agglomerated rubber latex (A1).

The agglomeration with at least one acid anhydride is described e.g on p. 8 to 12 of WO 2012/022710.

Preferably, acetic anhydride, more preferably in admixture with water, is used for the agglomeration. Preferably the agglomeration step $\beta$ is carried out by the addition of 0.1 to 5 parts by weight of acetic anhydride per 100 parts of the starting rubber latex solids.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above in step $\alpha$) are used. The pH value is adjusted by use of bases such as sodium hydroxide solution or preferably potassium hydroxide solution.

The obtained agglomerated rubber latex (A1) has a median weight particle diameter $D_{50}$ of generally 150 to 800 nm, preferably 180 to 700 nm, more preferably 200 to 600 nm, most preferred 250 to 500 nm, in particular preferred 300 to 400 nm. The agglomerated latex rubber latex (A1) obtained according to this method is preferably mono-modal.

Alternatively, the agglomeration can be done by adding a dispersion of an acrylate-based polymer.

Preference is given to the use of dispersions of copolymers of $C_1$ to $C_4$-alkyl acrylates, preferably of ethyl

acrylate, with from 0.1 to 10% by weight of monomers which form polar polymers, examples being acrylic acid, methacrylic acid, acrylamide, methacrylamide, N-methylol methacrylamide and N-vinylpyrrolidone. Particular preference is given to a copolymer of 92 to 98 wt.-% of ethyl acrylate and 2 to 8 wt.-% of methacrylamide. The agglomerating dispersion may, if desired, also contain more than one of the acrylate polymers mentioned.

In general, the concentration of the acrylate polymers in the dispersion used for agglomeration should be from 3 to 40% by weight. For the agglomeration, from 0.2 to 20 parts by weight, preferably from 1 to 5 parts by weight, of the agglomerating dispersion are used for each 100 parts of the rubber latex, the calculation in each case being based on solids. The agglomeration is carried out by adding the agglomerating dispersion to the rubber. The addition rate is usually not critical, and the addition usually takes from 1 to 30 minutes at from 20 to 90°C, preferably from 30 to 75°C.

Acrylate copolymers having a polydispersity U of less than 0.27 and a $d_{50}$ value of from 100 to 150 nm are preferably used for the agglomeration. Such acrylate copolymers are described in detail on pages 8 to 14 of WO 2014/170406.

In case of agglomeration with a dispersion of an acrylate copolymer generally the obtained graft substrate (A1) has a bimodal particle size distribution of nonagglomerated particles having a $d_{50}$ value in the range of from 80 to 120 nm and of agglomerated particles having a $d_{50}$ value in the range of 150 to 800 nm, preferably 180 to 700 nm, more preferably 200 to 600 nm, most preferred 250 to 500 nm.

In step $\gamma$) the agglomerated rubber latex (A1) is grafted to form the graft copolymer (A). Suitable grafting processes are described in detail on pages 12 to 14 of WO 2012/022710.

Graft copolymer (A) is obtained by emulsion polymerization of styrene and acrylonitrile - optionally partially replaced by alpha-methylstyrene, methyl methacrylate and/or maleic anhydride - in a weight ratio of 95:5 to 65:35 to obtain a graft sheath (A2) (in particular a graft shell) in the presence of the above-mentioned agglomerated butadiene rubber latex (A1).

Preferably, the graft copolymer (A) has a core-shell-structure.

The grafting process of the agglomerated rubber latex (A1) of each particle size is preferably carried out individually.

Preferably the graft polymerization is carried out by use of a redox catalyst system, e.g. with cumene hydroperoxide or tert.-butyl hydroperoxide as preferable hydroperoxides. For the other components of the redox catalyst system, any reducing agent and metal component known from literature can be used.

According to a preferred grafting process which is carried out in presence of at least one agglomerated butadiene rubber latex (A1) with a median weight particle diameter $D_{50}$ of preferably 280 to 350 nm, more preferably 300 to 330 nm, in an initial slug phase 15 to 40 wt.-%, more preferably 26 to 30 wt.-%, of the total monomers to be used for the graft sheath (A2) are added and polymerized, and this is followed by a controlled addition and polymerization of the remaining amount of monomers used for the graft sheath (A2) till they are consumed in the reaction to increase the graft ratio and improve the conversion. This leads to a low volatile monomer content of graft copolymer (A) with better impact transfer capacity.

Further details to polymerization conditions, emulsifiers, initiators, molecular weight regulators used in grafting step $\gamma$) are described in WO 2012/022710.

## Component (B)

Component (B) is a copolymer of styrene and acrylonitrile or of alpha-methylstyrene and acrylonitrile, preferably a copolymer of styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene. Copolymer (B) generally has a weight average molar mass $M_w$ of 85,000 to 190,000 g/mol, preferably 90,000 to 160,000 g/mol, more preferably 110,000 to 140,000 g/mol.

Preferably copolymer (B) (= component (B)) is a copolymer of styrene and acrylonitrile in a weight ratio of from preferably 78:22 to 65:35, more preferably 75:25 to 68:32, most preferred 72:28 to 70:30, it being possible for styrene and/or acrylonitrile to be partially (less than 50 wt.-%, preferably less than 20 wt.-%, more preferably less than 10 wt.-%, based on the total amount of monomers used for the preparation of (B)) replaced by methyl methacrylate, maleic anhydride and/or 4-phenylstyrene.

It is preferred that styrene and acrylonitrile are not partially replaced by one of the above-mentioned comonomers. Component (B) is preferably a copolymer of styrene and acrylonitrile.

Copolymer (B) often has a melt flow index (MFI) of 25 to 35 g/10 min (measured according to ASTM D 1238 at 220°C and 10 kg load). Preferably copolymer (B) is a copolymer of styrene and acrylonitrile in a weight ratio of from 78:22 to 65:35, preferably 75:25 to 68:32, more preferred 72:28 to 70:30.

Details relating to the preparation of copolymers (B) are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

Component (C)

Component (C) is at least one, preferably one, vinylidene fluoride copolymer (C). Suitable vinylidene fluoride copolymers are thermoplastic copolymers of vinylidene fluoride (VDF) comprising at least 50 wt.-% VDF. Said vinylidene fluoride copolymers comprising at least 50 wt.-% VDF preferably are copolymers of vinylidenfluoride and of at least one, preferably one, comonomer selected from chlorotrifluoroethylene (CTFE), hexafluoro-propylene (HFP), trifluoroethylene (VF3) and tetrafluoroethylene (TFE).

More preferably the vinylidene fluoride copolymer is a vinylidene fluoride (VDF) copolymer comprising preferably at least 75 wt.-%, more preferably at least 85 wt.-%, VDF.

The comonomer is preferably HFP. Even more preferably, the VDF copolymer only comprises VDF and HFP as monomers.

Most preferred the vinylidene fluoride copolymer (C) is a poly(vinylidene fluoride co-hexafluoropropylene) having a hexafluoropropylene content of < 15 wt.-%.

In particular preferred are poly(vinylidene fluoride co-hexafluoropropylene) having a hexafluoropropylene content of < 15 wt.-% have the following chemical structure

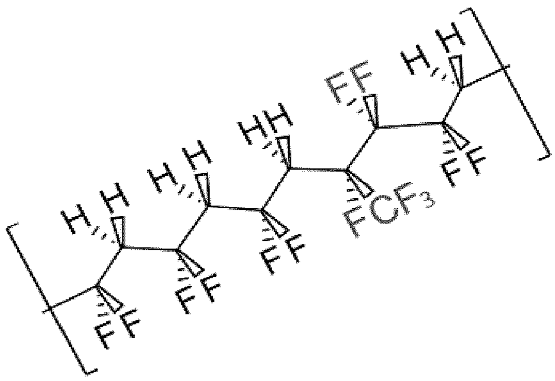

Preferred are such of the afore-mentioned components (C) which have a specific gravity (measured according to ASTM D792) of 1.80 and a refractive index (measured according to ASTM D542) of 1.40. In particular preferred are such having a melting point of 123°C and exhibiting a short-term stability to 300°C.

VDF copolymers as afore-mentioned are commercially available under the tradename Kynar Flex® from Arkema.

The vinylidene fluoride copolymer (C) may be used - optionally as an additive package - in the form of a masterbatch diluted with copolymer (B), in particular a SAN-copolymer (B), as matrix polymer. If the thermoplastic fluoropolymer is used as an additive package, said additive package may additionally comprise an interfacial agent, preferably chosen from polyethers (e.g. PEG) and stabilizers.

If component (C) is used as a masterbatch, the proportion of component (C), optionally as an additive package comprising component (C), is in the range of from 1 to 10 wt.-%, preferably from 2 to 10 wt.-%, preferably from 3 to 8 wt.-%, and the proportion of the matrix polymer (= copolymer (B)) is 90 to 99 wt.-%, preferably 90 to 98 wt.-%, more preferably 92 to 97 wt.-%, accordingly.

During compounding and molding the addition of the vinylidene fluoride copolymer (component (C)) helps to get rid of unwanted gel formation, die build up, black spots, hard spots due to excessive shear stress and heat.

During compounding and molding the vinylidene fluoride copolymer coats on to the extruder barrel and works as a protective sheath for the thermoplastic molding composition inside of the barrel. Thus, defects arising from high temperature and shear are reduced and a smooth surface of the thermoplastic molding composition is obtained upon molding. The vinylidene fluoride copolymer (C) not only coats the equipment of processing but also majorly remains in the bulk of the thermoplastic molding composition even after compounding and molding processes are completed. This is evident from FTIR spectra where a characteristic peak for the vinylidene fluoride copolymer is identified at ~ 1400 $cm^{-1}$.

A dispersive adhesion characteristic is observed for the vinylidene fluoride copolymer (C) due to inherent induced dipole resulting from its molecular structure. An induced dipole in the VDF copolymer originates from weak non-specific intermolecular forces. Therefore, a partial electrostatic charge is developed over the 'F'-atoms of the VDF copolymer due to this induced dipole generating an attractive sphere around the 'F'-atoms of the VDF copolymer. These attractive forces from the partially electrostatically charged 'F' atoms result in developing hydrogen bonding between 'H'

atoms of the polybutadiene core (= graft substrate (A1)) of graft copolymer (A) and VDF copolymer.

Lower surface energies of the VDF copolymer and the polybutadiene core of graft copolymer (A) compared to relatively higher surface energy of copolymer (B), preferably a SAN-copolymer, favors hydrogen bonding between the polybutadiene core and the VDF copolymer. This causes an adsorption of vinylidene fluoride copolymer (C) molecules around the polybutadiene core of graft copolymer A. The presence of adsorbed vinylidene fluoride copolymer (C) molecules increases the graft rubber density of graft copolymer A and creates low shear stress region around the polybutadiene core (= graft substrate (A1)) due to the inherent lubricating nature of the VDF copolymer. This protects the graft substrate (A1) from shear stress damage and prevents melt agglomeration during processing. Moreover, said phenomenon helps to retain a uniform distribution of the graft copolymer (A) in the ABS molding composition and prevents large size melt agglomerate formation.

During secondary processes such like etching, a uniform surface roughness is achieved due to a uniform graft copolymer (A) distribution leading to improved electroplating with lower surface defects of the thermoplastic molding composition. Thus, the vinylidene fluoride copolymer (C) comprised in the thermoplastic molding composition regulates the pre-plating process with controlled etching and avoids the roughness of the surface during molding.

The thermoplastic molding composition comprises component (C) in an amount of from 0.015 to 0.40 wt.-%, preferably 0.04 to 0.30 wt.-%, more preferably 0.05 to 0.21 wt.-%, which is just enough to give the required surface smoothness and further provides an effective trouble-free etching and plating process.

<u>Component (D)</u>

As component (D) at least one further additive/processing aid different from (C) is used. Examples of the at least one further additive/processing aid include, for example, lubricants (e.g. fatty acid amides, fatty acid amide derivatives, fatty acid metal salts), acid scavengers (e.g. metal oxides), antioxidants, silicone oils, interfacial agents such as polyethers (e.g polyether polyols and alkylene polyoxides), stabilizers for improving thermal stability, stabilizers for increasing photostability (e.g. UV absorbing additives), stabilizers for enhancing hydrolysis resistance and chemical resistance, anti-thermal decomposition agents, dyes, pigments, colorants, and antistats.

These further added substances may be admixed at any stage of the manufacturing operation, but preferably at an early stage in order to profit early on from the stabilizing effects (or other specific effects) of the added substance.

Component (D) is in a particular a lubricant, acid scavenger, antioxidant, silicone oil, stabilizer, and/or interfacial agent.

Lubricants which can be used as component (D) are fatty acid amides, fatty acid amide derivatives, and/or fatty acid metal salts. Fatty acid amides or fatty acid amide derivatives, preferably stearic acid amide or stearic acid amide derivative, preferably ethylene bis-stearamide (EBS). Suitable fatty acid amides or amide derivatives are based on saturated fatty acids having 14 to 22, preferably 16 to 20, carbon atoms.

Suitable fatty acid metal salts are metal salts of saturated fatty acids having 14 to 22, preferably 16 to 20, carbon atoms. Preferred fatty acid metal salts are calcium, magnesium or zinc salts of stearic or behenic acid, more preferred calcium, magnesium or zinc salts of stearic acid, most preferably magnesium stearate.

As acid scavengers metal oxides selected from Mg, Ca or Zn oxide, in particular MgO, can be preferably used.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units.

Hydroquinones and hydroquinone analogs are also suitable, as are substituted compounds, and also antioxidants based on tocopherols and derivatives thereof.

Further suitable antioxidants are based on trialkylphosphites such as O,O'-dioctadecylpentaerythritol bis(phosphite) (= distearylpentaerythrityldiphosphite (SPEP)).

It is also possible to use mixtures of different antioxidants. It is possible in principle to use any compounds which are customary in the trade or suitable for styrene copolymers, for example antioxidants from the Irganox® range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

Preferably the at least one antioxidant is distearylpentaerythritoldiphosphite or a combination of Irgafos® 168 and Irganox® 1076 (BASF).

Silicon oils which can be used as component (D) are silicon oils (polysiloxanes) having a kinematic viscosity in the range of from 1,000 to 60,000 centi Stokes (cst), preferably 20,000 to 40,000 centi Stokes, more preferably 25,000 to 35,000 centi Stokes.

For the measurement of the kinematic viscosity a standard test method according to ASTM D445-06 is used.

The interfacial agent which can be used as component (D) stabilizes the VDF-copolymer (C). It interacts physically or chemically with the VDF-copolymer (C).

Generally the interfacial agent is a polyether, preferably chosen from oligomers or polymers having alkylene oxide functional groups (for example ethylene or propylene oxide) or a polycaprolactone. In particular preferred is polyoxyethylene glycol, (polyethylene glycol (PEG)). Advantageously, the number-average molecular weight Mn lies between 400 and 15,000 g/mol (can be determined by measurement of the viscosity) and the melting point lies between 50 and 80°C. As an example of PEG, mention may be made of Pluriol E® from BASF or Polyglykol® from Clariant.

For further additives/processing aids, see, for example, "Plastics Additives Handbook", Hans Zweifel, 6th edition, Hanser Publ., Munich, 2009.

The thermoplastic molding composition according to the invention generally comprises component (D) in an amount of from 0.01 to 5 wt.-%, preferably 0.05 to 3 wt.-%, more preferably 0.50 to 2.5 wt.-%.

Preparation of Thermoplastic Molding Composition

A further aspect of the invention is a process for the preparation of the thermoplastic molding composition according to the invention by melt mixing components A, B, C and D. Generally the thermoplastic molding composition may be produced from the components A, B, C and D by any known method. However, it is preferable when the components are premixed and blended by melt mixing, for example conjoint extrusion, preferably with a twin-screw extruder, kneading or rolling of the components. This is done at temperatures in the range of from 160°C to 320°C, preferably from 180°C to 280°C, more preferably 215°C to 250°C.

In a preferred embodiment, the component (A) is first partially or completely isolated from the aqueous dispersion obtained in the respective production steps. For example, the graft copolymers (A) may be mixed as a moist or dry crumb/powder (for example having a residual moisture of from 0 to 40% with the other components, complete drying of the graft copolymers (A) then taking place during the mixing. The drying of the particles may also be performed as per DE-A 19907136.

Another aspect of the invention are shaped articles comprising the thermoplastic molding composition according to the invention. Shaped articles can by way of example be produced by injection molding, extrusion or blow-molding processes.

Another aspect of the invention is the use of thermoplastic molding compositions according to the invention or shaped articles produced therefrom for painting or plating, in particular electroplating, applications.

The surface of the shaped articles according to the invention has a reduced number of surface defects, in particular reduced surface pitting, reduced hard spots and inhomogeneity.

Another aspect of the invention are shaped articles according to the invention which surface is at least partially or preferably totally painted or plated (or coated), in particular electroplated, with one or more metal.

Even after secondary treatment (post treatment) processes including etching and for example final metallization through electro- or electroless-plating the obtained shaped articles have a high quality plated surface with a reduced number of surface defects (e.g. pit marks).

Shaped articles according to the invention which surface is metal plated may be obtained by a conventional electroplating process or a direct plating process.

A suitable conventional electroplating process usually comprises the following steps:

1) providing of a substrate (= shaped article) made from a thermoplastic molding composition according to the invention,
2) optionally cleaning/rinsing,
3) etching,
4) activation,
5) acceleration,
6) electroless chemical metal plating, in particular nickel,
7) deposition of one or more metal layers, in particular copper, nickel, platinum, gold or chromium, by electroplating.

A suitable direct plating process usually comprises the following steps: 1) providing of a substrate (= shaped article) made from the thermoplastic molding composition according to the invention, 2) optionally cleaning/rinsing, 3) etching, 4) activation, 5) deposition of one or more metal layers, in particular one or more layers of one or more metals such as copper, nickel, chromium, platinum and/or gold, by electroplating.

For the preparation of a metal-plated shaped article according to the invention a conventional electroplating process is preferred.

The etching process is carried out by use of usual etching reagents such as a system based on chromic acid. For the activation and acceleration step commonly used agents for this purpose can be used. Pd/Sn-solutions for activation are preferably used.

The thickness of the single layers is in the range of from 0.1 to 50 $\mu$m. The chemical deposited layer, if present,

is usually a thin layer in the range of from 0.1 to 0.5 μm. The top layer is preferably a copper, nickel, platinum, gold or chromium layer. In automotive applications the top layer is often a chromium layer.

Another aspect of the invention is the use of shaped articles having a painted or metal-plated surface according to the invention for automotive, household and electronic applications. Preferred is the use of shaped articles having a metal-plated surface according to the invention for automotive - interior and exterior - applications and electronic applications.

The invention is further illustrated by the examples, Figures and the claims.

Examples

Materials used:

Component (A)

Fine-particle butadiene rubber latex (S-A1)

The fine-particle butadiene rubber latex (S-A1) which is used for the agglomeration step was produced by emulsion polymerization using tert-dodecylmercaptan as chain transfer agent and potassium persulfate as initiator at temperatures from 60°C to 80°C. The addition of potassium persulfate marked the beginning of the polymerization.

Finally the fine-particle butadiene rubber latex (S-A1) was cooled below 50°C and the non reacted monomers were removed partially under vacuum (200 to 500 mbar) at temperatures below 50°C which defines the end of the polymerization.

Then the latex solids (in % per weight) were determined by evaporation of a sample at 180°C for 25 minutes in a drying cabinet. The monomer conversion is calculated from the measured latex solids. The butadiene rubber latex (S-A1) is characterized by the following parameters, see table 1.

Latex S-A1-1

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latex S-A1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt (wt.-% based on monomers) | 0.559 |
| Salt amount relative to the weight of solids of the rubber latex | 0.598 |
| Monomer conversion (%) | 89.3 |
| Dw (nm) | 87 |
| pH | 10.6 |
| Latex solids content (wt.-%) | 42.6 |
| K | 0.91 |

$$K = W * ( 1 - 1.4 * S ) * Dw$$

W = decomposed potassium persulfate [parts per 100 parts rubber]
S = salt amount in percent relative to the weight of solids of the rubber latex

Dw = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (S-A1) was determined. The solid content of the agglomerated butadiene rubber latex (A), the pH value und the median weight particle diameter $D_{50}$ was determined.

Table 2: Production of the coarse-particle, agglomerated butadiene rubber latices (A1)

| latex A1 | | A1-1 | A1-2 |
|---|---|---|---|
| used latex S-A1 | | S-A1-1 | S-A1-1 |
| concentration latex S-A1 before agglomeration | wt.-% | 37.4 | 37.4 |
| amount acetic anhydride | Parts | 0.90 | 0.91 |
| amount KOH | Parts | 0.81 | 0.82 |
| concentration KOH solution | wt.-% | 3 | 3 |
| solid content latex A1 | wt.-% | 32.5 | 32.5 |
| coagulate | Parts | 0.01 | 0.00 |
| pH | | 9.0 | 9.0 |
| $D_{50}$ | Nm | 315 | 328 |

Production of the graft copolymers (A)

59.5 wt.-parts of mixtures of the coarse-particle, agglomerated butadiene rubber latices A1-1 and A1-2 (ratio 50 : 50, calculated as solids of the rubber latices (A1)) were diluted with water to a solid content of 27.5 wt.-% and heated to 55°C. 40.5 wt.-parts of a mixture consisting of 72 wt.-parts styrene, 28 wt.-parts acrylonitrile and 0.4 wt.-parts tert-dodecylmercaptan were added in 3 hours 30 minutes. At the same time when the monomer feed started the polymerization was started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and separately an aqueous solution of 0.22 wt.-parts of glucose, 0.36 wt.-% of tetrasodium pyrophosphate and 0.005 wt.-% of iron-(II)-sulfate within 3 hours 30 minutes.

The temperature was increased from 55 to 75°C within 3 hours 30 minutes after start feeding the monomers. The polymerization was carried out for further 2 hours at 75°C and then the graft rubber latex (= graft copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%).

The obtained product is graft copolymer (A-I).

Component (B)

Statistical copolymer of styrene and acrylonitrile with a ratio of polymerized styrene to acrylonitrile of 70:30 with a weight average molecular weight Mw of 125,000 g/mol, a polydispersity of Mw/Mn of 2.3 and a melt flow rate (MFR) (220°C/10 kg load) of 30 mL/10 minutes, produced by free radical solution polymerization.

Component (C)

Kynar Superflex® 2501-20 obtainable from Arkema (a copolymer of vinylidene fluoride and hexafluoropropylene). In the first trial set (see Tables 3 and 4) component (C) was used as a master batch. Therefor a 5 wt.-% master batch of component (C) was prepared by dilution of component (C) in above-mentioned SAN-copolymer (B) beforehand and this master batch was added to the mixture of components (A), (B) and (D) after adjusting the parts required per batch. In the second trial set (see Tables 5 and 6), component (C) was added as such (in the pure form).

Component (D)

D-1: ethylene bis-stearamide (Palmowax®) obtained from Palmamide Sdn Bhd, Malaysia
D-2: magnesium stearate from Sunshine Organics Pvt. Ltd, India
D-3: magnesium oxide from Kyowa Chemical Industry Co. Ltd
D-4: distearylpentaerythrityldiphosphite (SPEP) from Addivant, Switzerland
D-5: silicon oil having a kinematic viscosity of 30000 centi Stokes from KK Chempro India Pvt Ltd

Thermoplastic molding compositions

Graft rubber polymer (A-I), SAN-copolymer (B), component (C) as such or as a master batch as afore-mentioned, and the afore-mentioned further components (D) were mixed (composition of polymer blends, see Tables 3 and 5, batch size 5 kg) for 2 minutes in a high speed mixer to obtain good dispersion and a uniform premix and then said premix was melt blended in a twin-screw extruder at a speed of 350 rpm and using an incremental temperature profile from 215° C to 250°C for the different barrel zones. The extruded polymer strands were cooled in a water bath, air-dried and pelletized. Then from the obtained polymer blend standard test specimens were formed by injection molding (incremental temperature profile of injection molding machine barrel: 220 to 240°C).

Test Methods and Characterization

Particle Size Dw/ $D_{50}$

For measuring the weight average particle size Dw (in particular the median weight particle diameter D50) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous saccharose solution (24% by wt.).

The calculation of the weight average particle size Dw was performed by means of the formula

$$\text{formula} \quad D_w = \text{sum}\,(\, n_i * d_i^4 \,) \,/\, \text{sum}(\, n_i * d_i^3 \,)$$

$n_i$: number of particles of diameter $d_i$.

Molar Mass $M_w$

The weight average molar mass $M_w$ was determined by GPC (solvent: tetrahydrofuran, polystyrene as polymer standard) with UV detection according to DIN 55672-1:2016-03.

Melt Flow Index (MFI) or Melt Flow Rate (MFR)

MFI/MFR test was performed on ABS pellets (ASTM D 1238, 220°C/10 kg load) using a MFI-machine of CEAST, Italy.

Notched Izod Impact Strength (NIIS) Test

Izod impact tests were performed on notched ABS test specimens (ASTM D 256 standard) using an instrument of CEAST (part of Instron's product line), Italy.

Tensile Strength (TS) and Tensile Modulus (TM) Test

Tensile tests (ASTM D 638) of ABS test specimens were carried out at 23°C using a Universal testing Machine (UTM) of Instron Instruments, UK.

Flexural Strength (FS) and Flexural Modulus (FM) Test

Flexural tests of ABS test specimens (ASTM D 790 standard) were carried out at 23°C using a UTM of Lloyd Instruments, UK.

Heat deflection temperature

Heat deflection temperature test was performed on injection molded test specimens (ASTM D 648) using a ZwickRoell instrument, Germany.

VICAT Softening Temperature (VST)

Vicat softening temperature test was performed on injection molded test specimen (ASTM D 1525-09 standard) using a ZwickRoell machine, Germany.

Test was carried out at a heating rate of 120°C/hr (Method B) at 50 N loads.

Rockwell Hardness

Hardness tests of the injection molded test specimens (ISO - 2039/2-11) were carried out on a test machine of Fuel Instruments & Engineers Pvt. Ltd. (FIE), India.

Surface quality (Smoothness)

Surface quality of the molded test samples was determined according to two different methods.

1st method: visual observation of the surface of molded test samples (150x100 $mm^2$) for irregularities and qualitative appearance through an optical microscope at 40X zoom. Maximum size of the irregularity was checked.

2nd method: the surface of molded test samples (150x100 $mm^2$) was treated with hot air at 500°C for 30 seconds. Then, the surface was visually observed with naked eye for any surface irregularities (pit marks) which were counted. The average number of pit marks of three of such test specimens was noted.

Table 3

| | Trial-Set 1 composition of polymer blend (amounts in wt.-%) | | |
|---|---|---|---|
| Components | Comparative Example 1 | Example 1 | Example 2 |
| ABS graft copolymer (A-I) | 29.4 | 29.4 | 29.4 |
| SAN-copolymer (B) | 68.7 | 68.7 | 68.7 |
| VDF-copolymer (C) [5 wt.-% masterbatch in SAN-copolymer (B)] | 0 | 0.97 | 1.92 |
| D-1 | 1.47 | 1.46 | 1.44 |
| D-2 | 0.10 | 0.10 | 0.10 |
| D-3 | 0.05 | 0.05 | 0.05 |
| D-4 | 0.15 | 0.15 | 0.14 |
| D-5 | 0.15 | 0.15 | 0.14 |

Table 4

| Properties | Unit | Trial-Set 1 | | |
|---|---|---|---|---|
| | | Comparative Example 1 | Example 1 | Example 2 |
| Melt Flow Rate | g/10 min | 16.5 | 16.5 | 18 |
| NIIS, 6.4 mm | kg.cm/cm | 34.5 | 33.5 | 33 |
| NIIS, 3.2 mm | kg.cm/cm | 42.5 | 40 | 40.5 |
| Tensile Strength | $kg/cm^2$ | 480 | 480 | 480 |
| Tensile Modulus | $kg/cm^2$ | 24450 | 24900 | 24650 |
| Elongation at Break | % | 24 | 23 | 25 |
| Flexural Strength | $kg/cm^2$ | 820 | 825 | 820 |
| Flexural Modulus | $kg/cm^2$ | 27200 | 27300 | 27150 |
| HDT, Annealed | °C | 96.5 | 96.5 | 96 |
| Vicat Softening Temperature | °C | 99 | 99 | 99 |
| Surface quality 2$^{nd}$ method | number of pit marks | 3 | 1.3 | 0.7 |

Table 4 shows that, compared to comparative Example 1, the surface quality of Examples 1 and 2 is significantly improved while the good mechanical properties are maintained.

Figures 1 to 3 show photographs of the molded surface of different ABS polymer test samples observed through an optical microscope at 40X zoom.

Figure 1 shows the surface of a test sample of comparative example 1. Figure 2 shows the surface of a test sample of example 1 (amount component (C) ~ 500 ppm). Figure 3 shows the surface of a test sample of example 2 (amount component (C) ~ 1000 ppm).

Figures 2 and 3 show that - in comparison to Figure 1 - the number of irregularities is reduced, the irregularities are smaller and the surface is smoother.

Table 5

| | Trial-Set 2 composition of polymer blend (amounts in wt.-%) | | |
|---|---|---|---|
| Components | Comparative Example 2 | Example 3 | Example 4 |
| ABS graft copolymer (A-I) | 29.4 | 29.4 | 29.4 |
| SAN-copolymer (B) | 68.7 | 68.7 | 68.7 |
| VDF-copolymer (C) | 0 | 0.10 | 0.20 |
| D-1 | 1.47 | 1.47 | 1.47 |
| D-2 | 0.10 | 0.10 | 0.10 |
| D-3 | 0.05 | 0.05 | 0.05 |
| D-4 | 0.15 | 0.15 | 0.15 |
| D-5 | 0.15 | 0.15 | 0.15 |

Table 6

| Properties | Unit | Trial-Set 2 | | |
|---|---|---|---|---|
| | | Comparative Example 2 | Example 3 | Example 4 |
| Melt Flow Rate | g/10 min | 17 | 18 | 18.5 |
| NIIS, 6.4 mm | kg.cm/cm | 29.5 | 29.5 | 28 |
| NIIS, 3.2 mm | kg.cm/cm | 40 | 40 | 39 |

(continued)

| Properties | Unit | Trial-Set 2 | | |
|---|---|---|---|---|
| | | Comparative Example 2 | Example 3 | Example 4 |
| Tensile Strength | kg/cm$^2$ | 490 | 490 | 490 |
| Tensile Modulus | kg/cm$^2$ | 25750 | 26100 | 25650 |
| Elongation at Break | % | 24 | 22 | 22 |
| Flexural Strength | kg/cm$^2$ | 845 | 860 | 860 |
| Flexural Modulus | kg/cm$^2$ | 27850 | 28150 | 28200 |
| HDT, Annealed | °C | 98 | 98 | 97.5 |
| Vicat Softening Temperature | °C | 100 | 100 | 100 |
| Surface quality 2$^{nd}$ method | number of pit marks | 3 | 2.6 | 1.7 |

Table 6 shows that - compared to comparative Example 2 - the surface quality of Example 3 is improved and the surface quality of Example 4 is significantly improved. The good mechanical properties are maintained.

Figures 4 to 6 show photographs of the molded surface of different ABS polymer test samples observed through an optical microscope at 40X zoom.

Figure 4 shows the surface of a test sample of comparative example 2.

Figure 5 shows the surface of a test sample of example 3.

Figure 6 shows the surface of a test sample of example 4.

Figures 5 and 6 show that - in comparison to Figure 4 - the number of irregularities is reduced, the irregularities are smaller and the surface is smoother.

Test Report for electroplated part performance

Shaped articles (molded parts) produced from ABS molding compositions according to Example 3 by injection molding were used for electroplating by a conventional method. The surface of said molded parts was plated with a first layer (inner layer) of copper, a second layer (middle layer) of nickel and a third layer (outer layer) of chrome.

Eighteen test samples of the obtained plated parts were selected for final inspection and to perform standard tests on the plated surface. Details of tests are shown in Table 7.

Table 7

<table>
<tr><td>Finishing</td><td colspan="5">Chrome Hexavalent</td></tr>
<tr><td>Test</td><td>Norms</td><td>Requirements</td><td colspan="3">Results</td></tr>
<tr><td rowspan="14">Appearance</td><td rowspan="14">SES D 2212b</td><td>Pitting</td><td colspan="3" rowspan="14">Ok<br>No defect found</td></tr>
<tr><td>Fine pitting</td></tr>
<tr><td>Excess chrome</td></tr>
<tr><td>Burn spots</td></tr>
<tr><td>Reflections</td></tr>
<tr><td>Not Metallized</td></tr>
<tr><td>Cavities</td></tr>
<tr><td>Lack of penetration</td></tr>
<tr><td>Deformation</td></tr>
<tr><td>Scratches</td></tr>
<tr><td>Joint line</td></tr>
<tr><td>Scraping</td></tr>
<tr><td>Breakages</td></tr>
<tr><td>Any other defects such as dent and others which affect the part quality</td></tr>
<tr><td>Thermal Cycle Test 3 Cycles (1+2+3+4)<br>1) -30 ± 2°C x 1 hr.<br>2) 20 ± 2°C x 0.5 hr.<br>3) 80 ± 2°C x 1 hr.<br>4) 20 ± 2°Cx0.5 hr.</td><td>SES D 2212b</td><td>Check for abnormalities such as blistering or cracking on the base material and plated surface</td><td colspan="3">Ok<br>No defect found</td></tr>
<tr><td>Micropores (mp)</td><td>SES D 2212b</td><td>≥ 10,000 mp/cm$^2$</td><td colspan="3">Ok<br>13,463 mp/cm$^2$</td></tr>
<tr><td>S.T.E.P</td><td>ASTM B764 - 04 (2014)</td><td>*Nimp ~**Nib > 20 mV<br>***Nisb -Nib > 100 mV</td><td colspan="3">Nimp -Nib: 28 mV<br>Nisb -Nib : 111 mV</td></tr>
<tr><td rowspan="3">CASS TEST</td><td rowspan="3">SES D 2212b</td><td rowspan="3">Check for defects such as rusting, swelling or cracking in part</td><td>Part</td><td>Rating</td><td>Result</td></tr>
<tr><td>HCD****</td><td>10/8</td><td>Ok No defect found</td></tr>
<tr><td>LCD*****</td><td>10/8</td><td>Ok No defect found</td></tr>
</table>

| | | | |
|---|---|---|---|
| Glacial Acetic Test | ASTM D 1939 | Check for defects such as stress marks and cracking | Ok<br>No defect found |

(continued)

| | | | Part | Location | Cr (μm) | Ni (μm) | Cu (μm) | Result |
|---|---|---|---|---|---|---|---|---|
| Plating Thickness | SES D 2212b | Cr ≥ 0.1 μm<br>Ni ≥ 13 μm<br>Cu≥17μm | HCD | P1 | 0.51 | 25.4 | 28.1 | Ok |
| | | | 1B1 | P2 | 0.46 | 21.0 | 25.2 | Ok |
| | | | LCD | P1 | 0.39 | 21.7 | 25.0 | Ok |
| | | | 1A4 | P2 | 0.31 | 22.4 | 23.2 | Ok |
| *Nimp = microporous Ni layer, **Nisb = semi bright Ni layer, ***Nib = bright Ni layer;<br>****HCD = high current density; *****LCD = low current density; | | | | | | | | |

Appearance, micropores, CASS (Copper Accelerated Acetic Acid Salt Spray) test and plating thickness were measured as per SES D 2212 b (Suzuki Engineering Standards) which is an internal standard for Maruti Suzuki India Ltd.

CASS test is a commonly used accelerated corrosion test for verifying protective properties of nickel and chrome plated parts. The exposure duration is typically selected based on the type of corrosion resistance needed (whether it is for appearance or functional). As per SES D 2212 b, the test (1 cycle) has a duration of 24 hours (16 hours with CASS spray at 49°C ± 2°C and 8 hours without CASS spray at 23°C). The plated parts are subjected to 2 cycles of the CASS test.

In the CASS test, the rating is based on a scale from 10 to 1 signifying no visible corrosion to high corrosion:

10 = no visible corrosion,
9 = trace of corrosion (one or two small red rust spots),
8 = slight corrosion (some small red rust spots),
7 = light corrosion (many small red rust spots, approx. 10% of area),
6 = moderate corrosion (medium size rust spots, 10-40% of area),
5, 4, 3, 2, 1 = progressively more corrosion.

STEP is a test that measures the electrical potential difference between each nickel layer and the nickel thickness of each layer. Measurements are derived by coulometric method according to ASTM B764 - 04(2014).

Glacial acetic acid test is performed as per ASTM D 1939:1994 to determine residual stresses in extruded or molded Acrylonitrile-Butadiene-Styrene (ABS) parts.

All 18 plated parts used for testing their electroplating performance were free from any visual defects, including pit marks, and passed (100% pass and 0% rejection) all of the above-mentioned tests conducted for checking plating quality.

## Claims

1. Thermoplastic molding composition comprising components A, B, C and D:

(A) 15 to 44.975 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%,

obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 150 to 800 nm,
where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 55 to 84.975 wt.-% of at least one copolymer (B) of styrene and acrylonitrile or of alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to

be partially (less than 50 wt.-%) replaced by methyl methacrylate, maleic anhydride and/or 4-phenylstyrene;
wherein copolymer (B) has a weight average molar mass $M_w$ of 85,000 to 190,000 g/mol;
(C) 0.015 to 0.40 wt.-% of at least one vinylidene fluoride copolymer (C);
(D) 0.01 to 5 wt.-% of at least one further additive/processing aid (D) different from (C);
where components A, B, C, and D sum to 100 wt.-%, and
wherein the median weight particle diameter $D_{50}$ is determined with a disc centrifuge, and the weight average molar mass $M_w$ is determined by GPC with UV detection according to DIN 55672-1:2016-03.

2. Thermoplastic molding composition according to claim 1 comprising

| | |
|---|---|
| component (A): | 20 to 39.91 wt.-%, preferably 25 to 34.45 wt.-%; |
| component (B): | 60 to 79.91 wt.-%, preferably 65 to 74.45 wt.-%; |
| component (C): | 0.04 to 0.30 wt.-%, preferably 0.05 to 0.21 wt.-%; |
| component (D): | 0.05 to 3 wt.-%, preferably 0.50 to 2.50 wt.-%. |

3. Thermoplastic molding composition according to claim 1 or 2, wherein vinylidene fluoride copolymer (C) comprises at least 50 wt.-% vinylidenfluoride (VDF) and is a copolymer of vinylidenfluoride and of at least one, preferably one, comonomer selected from chlorotrifluoroethylene (CTFE), hexafluoropropylene (HFP), trifluoroethylene (VF3) and tetrafluoroethylene (TFE), preferably HFP.

4. Thermoplastic molding composition according to any of claims 1 to 3, wherein vinylidene fluoride copolymer (C) is a vinylidene fluoride (VDF) copolymer comprising at least 75 wt.-%, preferably at least 85 wt.-%, VDF.

5. Thermoplastic molding composition according to any of claims 1 to 4, wherein vinylidene fluoride copolymer (C) is a copolymer of vinylidenfluoride and hexafluoropropylene (HFP).

6. Thermoplastic molding composition according to any of claims 1 to 5 wherein vinylidene fluoride copolymer (C) is a poly(vinylidene fluoride co-hexafluoro-propylene) having a hexafluoropropylene content of $< 15$ wt.-%.

7. Thermoplastic molding composition according to any of claims 1 to 6, wherein graft copolymer (A) is obtained by emulsion polymerization of styrene and acrylonitrile in a weight ratio of 80:20 to 65:35, preferably 74:26 to 70:30, to obtain a graft sheath (A2), in the presence of at least one agglomerated butadiene rubber latex (A1) with a median weight particle diameter $D_{50}$ of 200 to 600 nm, preferably 250 to 500 nm.

8. Thermoplastic molding composition according to any of claims 1 to 7, wherein copolymer (B) is a copolymer of styrene and acrylonitrile, in a weight ratio of from 78:22 to 55:45, preferably 75:25 to 65:35 and has a weight average molar mass $M_w$ of 90,000 to 160,000 g/mol, preferably 110,000 to 140,000 g/mol.

9. Thermoplastic molding composition according to any of claims 1 to 8, wherein component (D) is a lubricant, acid scavenger, antioxidant, silicone oil, stabilizer, and/or interfacial agent.

10. Process for the preparation of the thermoplastic molding composition according to any of claims 1 to 9 by melt mixing the components (A), (B), (C) and (D) at temperatures in the range of from 160°C to 320°C.

11. Shaped article comprising the thermoplastic molding composition according to any of claims 1 to 9.

12. Use of a thermoplastic molding composition according to any of claims 1 to 9 or of a shaped article according to claim 11 for painting or plating, in particular electroplating, applications.

13. Shaped article according to claim 11, the surface of which is at least partially or preferably totally painted or plated, in particular electroplated, with one or more metal.

14. Shaped article according to claim 13 obtained by an electroplating process which surface is, preferably totally, plated with one or more layers of one or more metals selected from copper, nickel, platinum, gold and chromium.

15. Use of a shaped article according to claims 13 or 14 for automotive, household and electronic applications.

**Patentansprüche**

1. Thermoplastische Formmasse, umfassend Komponenten A, B, C und D:

(A) 15 bis 44,975 Gew.-% mindestens eines Pfropfcopolymers (A), bestehend aus 15 bis 60 Gew.-% einer Pfropfhülle (A2) und 40 bis 85 Gew.-% einer Pfropfgrundlage - einem agglomerierten Butadienkautschuklatex - (A1), wobei (A1) und (A2) in der Summe 100 Gew.-% ergeben,

erhalten durch Emulsionspolymerisation von Styrol und Acrylnitril in einem Gewichtsverhältnis von 95:5 bis 65:35, um eine Pfropfhülle (A2) zu erhalten, wobei Styrol und/oder Acrylnitril teilweise (zu weniger als 50 Gew.-%) durch alpha-Methylstyrol, Methylmethacrylat oder Maleinsäureanhydrid oder Mischungen davon ersetzt werden können,
in Gegenwart von mindestens einem agglomerierten Butadienkautschuklatex (A1) mit einem gewichtsmittleren Teilchendurchmesser $D_{50}$ von 150 bis 800 nm, wobei der agglomerierte Kautschuklatex (A1) durch Agglomeration von mindestens einem Ausgangs-Butadienkautschuklatex (S-A1) mit einem gewichtsmittleren Teilchendurchmesser $D_{50}$ von gleich oder weniger als 120 nm, vorzugsweise gleich oder weniger als 110 nm, erhalten wird;

(B) 55 bis 84,975 Gew.-% mindestens eines Copolymers (B) aus Styrol und Acrylnitril oder aus alpha-Methylstyrol und Acrylnitril, vorzugsweise Styrol und Acrylnitril, in einem Gewichtsverhältnis von 95:5 bis 50:50, vorzugsweise 78:22 bis 55:45, besonders bevorzugt 75:25 bis 65:35, wobei Styrol, alpha-Methylstyrol und/oder Acrylnitril teilweise (zu weniger als 50 Gew.-%) durch Methylmethacrylat, Maleinsäureanhydrid und/oder 4-Phenylstyrol ersetzt sein können;
wobei das Copolymer (B) eine gewichtsmittlere molare Masse $M_w$ von 85.000 bis 190.000 g/mol aufweist;
(C) 0,015 bis 0,40 Gew.-% mindestens eines Vinylidenfluorid-Copolymers (C);
(D) 0,01 bis 5 Gew.-% mindestens eines weiteren, von (C) verschiedenen Zusatzstoffes/Verarbeitungshilfsmittels (D);
wobei die Summe der Komponenten A, B, C und D 100 Gew.-% beträgt, und
wobei der gewichtsmittlere Teilchendurchmesser $D_{50}$ mit einer Scheibenzentrifuge bestimmt wird und die gewichtsmittlere molare Masse $M_w$ durch GPC mit UV-Detektion gemäß DIN 55672-1:2016-03 bestimmt wird.

2. Thermoplastische Formmasse nach Anspruch 1, umfassend

| | |
|---|---|
| Komponente (A): | 20 bis 39,91 Gew.-%, vorzugsweise 25 bis 34,45 Gew.-%; |
| Komponente (B): | 60 bis 79,91 Gew.-%, vorzugsweise 65 bis 74,45 Gew.-%; |
| Komponente (C): | 0,04 bis 0,30 Gew.-%, vorzugsweise 0,05 bis 0,21 Gew.-%; |
| Komponente (D): | 0,05 bis 3 Gew.-%, vorzugsweise 0,50 bis 2,50 Gew.-%. |

3. Thermoplastische Formmasse nach Anspruch 1 oder 2, wobei das Vinylidenfluorid-Copolymer (C) mindestens 50 Gew.-% Vinylidenfluorid (VDF) umfasst und ein Copolymer aus Vinylidenfluorid und mindestens einem, vorzugsweise einem, Comonomer, ausgewählt aus Chlortrifluorethylen (CTFE), Hexafluorpropylen (HFP), Trifluorethylen (VF3) und Tetrafluorethylen (TFE), vorzugsweise HFP, ist.

4. Thermoplastische Formmasse nach einem der Ansprüche 1 bis 3, wobei Vinylidenfluorid-Copolymer (C) ein Vinylidenfluorid (VDF)-Copolymer ist, das mindestens 75 Gew.-%, vorzugsweise mindestens 85 Gew.-%, VDF enthält.

5. Thermoplastische Formmasse nach einem der Ansprüche 1 bis 4, wobei Vinylidenfluorid-Copolymer (C) ein Copolymer aus Vinylidenfluorid und Hexafluorpropylen (HFP) ist.

6. Thermoplastische Formmasse nach einem der Ansprüche 1 bis 5, wobei Vinylidenfluorid-Copolymer (C) ein Poly(vinylidenfluorid-co-hexafluorpropylen) mit einem Hexafluorpropylen-Gehalt von < 15 Gew.-% ist.

7. Thermoplastische Formmasse nach einem der Ansprüche 1 bis 6, wobei das Pfropfcopolymer (A) durch Emulsionspolymerisation von Styrol und Acrylnitril in einem Gewichtsverhältnis von 80:20 bis 65:35, vorzugsweise 74:26 bis 70:30, unter Erhalt einer Pfropfhülle (A2) in Gegenwart von mindestens einem agglomerierten Butadienkautschuklatex (A1) mit einem gewichtsmittleren Teilchendurchmesser $D_{50}$ von 200 bis 600 nm, vorzugsweise 250 bis

500 nm, erhalten wird.

8. Thermoplastische Formmasse nach einem der Ansprüche 1 bis 7, wobei das Copolymer (B) ein Copolymer aus Styrol und Acrylnitril in einem Gewichtsverhältnis von 78:22 bis 55:45, vorzugsweise 75:25 bis 65:35 ist und eine gewichtsmittlere molare Masse $M_w$ von 90.000 bis 160.000 g/mol, vorzugsweise 110.000 bis 140.000 g/mol aufweist.

9. Thermoplastische Formmasse nach einem der Ansprüche 1 bis 8, wobei Komponente (D) ein Gleitmittel, Säurefänger, Antioxidationsmittel, Silikonöl, Stabilisator und/oder Grenzflächenmittel ist.

10. Verfahren zur Herstellung der thermoplastischen Formmasse nach einem der Ansprüche 1 bis 9 durch Schmelzmischen der Komponenten (A), (B), (C) und (D) bei Temperaturen im Bereich von 160°C bis 320°C.

11. Formkörper umfassend die thermoplastische Formmasse nach einem der Ansprüche 1 bis 9.

12. Verwendung einer thermoplastischen Formmasse nach einem der Ansprüche 1 bis 9 oder eines Formkörpers nach Anspruch 11 für Lackier- oder Beschichtungsanwendungen, insbesondere für Galvanisierungsanwendungen.

13. Formkörper nach Anspruch 11, dessen Oberfläche zumindest teilweise oder vorzugsweise vollständig lackiert oder mit einem oder mehreren Metallen beschichtet, insbesondere galvanisiert, ist.

14. Formkörper nach Anspruch 13, der durch ein Galvanisierungsverfahren erhalten wird, wobei die Oberfläche vorzugsweise vollständig mit einer oder mehreren Schichten eines oder mehrerer Metalle, ausgewählt aus Kupfer, Nickel, Platin, Gold und Chrom, beschichtet wird.

15. Verwendung eines Formkörpers nach Anspruch 13 oder 14 für Anwendungen in den Bereichen Automobil, Haushalt und Elektronik.

**Revendications**

1. Composition de moulage thermoplastique comprenant des composants A, B, C et D :

(A) 15 à 44,975 % en poids d'au moins un copolymère greffé (A) constitué de 15 à 60 % en poids d'une gaine de greffage (A2) et 40 à 85 % en poids d'un substrat de greffage - un latex de caoutchouc de butadiène aggloméré - (A1), où (A1) et (A2) totalisent 100 % en poids,

obtenu par polymérisation en émulsion de styrène et d'acrylonitrile en un rapport en poids de 95 : 5 à 65 : 35 pour obtenir une gaine de greffage (A2), le styrène et/ou l'acrylonitrile pouvant être remplacé(s) partiellement (moins de 50 % en poids) par de l'alpha-méthylstyrène, du méthacrylate de méthyle ou de l'anhydride maléique ou des mélanges correspondants,
en la présence d'au moins un latex de caoutchouc de butadiène aggloméré (A1) doté d'un diamètre médian de particule en poids $D_{50}$ de 150 à 800 nm,
le latex de caoutchouc aggloméré (A1) étant obtenu par agglomération d'au moins un latex de caoutchouc de butadiène de départ (S-A1) ayant un diamètre médian de particule en poids $D_{50}$ égal ou inférieur à 120 nm, préférablement égal ou inférieur à 110 nm ;

(B) 55 à 84,975 % en poids d'au moins un copolymère (B) de styrène et d'acrylonitrile ou d'alpha-méthylstyrène et d'acrylonitrile, préférablement de styrène et d'acrylonitrile, en un rapport en poids allant de 95 : 5 à 50 : 50, préférablement 78 : 22 à 55 : 45, plus préférablement 75 : 25 à 65 : 35, le styrène, l'alpha-méthylstyrène et/ou l'acrylonitrile pouvant être remplacé(s) partiellement (moins de 50 % en poids) par du méthacrylate de méthyle, de l'anhydride maléique et/ou du 4-phénylstyrène ;
le copolymère (B) ayant une masse molaire moyenne en poids $M_w$ de 85 000 à 190 000 g/mole ;
(C) 0,015 à 0,40 % en poids d'au moins un copolymère de fluorure de vinylidène (C) ;
(D) 0,01 à 5 % en poids d'au moins un autre additif/auxiliaire de traitement (D) différent de (C) ;
les composants A, B, C et D totalisant 100 % en poids, et
le diamètre médian de particule en poids $D_{50}$ étant déterminé avec une centrifugeuse à disque, et la masse molaire moyenne en poids $M_w$ étant déterminée par GPC avec une détection UV selon la norme DIN 55672-1:2016-03.

**2.** Composition de moulage thermoplastique selon la revendication 1 comprenant

composant (A) : 20 à 39,91 % en poids, préférablement 25 à 34,45 % en poids ;
composant (B) : 60 à 79,91 % en poids, préférablement 65 à 74,45 % en poids ;
composant (C) : 0,04 à 0,30 % en poids, préférablement 0,05 à 0,21 % en poids ;
composant (D) : 0,05 à 3 % en poids, préférablement 0,50 à 2,50 % en poids.

**3.** Composition de moulage thermoplastique selon la revendication 1 ou 2, un copolymère de fluorure de vinylidène (C) comprenant au moins 50 % en poids de fluorure de vinylidène (VDF) et étant un copolymère de fluorure de vinylidène et d'au moins un, préférablement un, comonomère choisi parmi le chlorotrifluoroéthylène (CTFE), l'hexafluoropropylène (HFP), le trifluoroéthylène (VF3) et le tétrafluoroéthylène (TFE), préférablement HFP.

**4.** Composition de moulage thermoplastique selon l'une quelconque des revendications 1 à 3, le copolymère de fluorure de vinylidène (C) étant un copolymère de fluorure de vinylidène (VDF) comprenant au moins 75 % en poids, préférablement au moins 85 % en poids, de VDF.

**5.** Composition de moulage thermoplastique selon l'une quelconque des revendications 1 à 4, le copolymère de fluorure de vinylidène (C) étant un copolymère de fluorure de vinylidène et d'hexafluoropropylène (HFP) .

**6.** Composition de moulage thermoplastique selon l'une quelconque des revendications 1 à 5, le copolymère de fluorure de vinylidène (C) étant un poly(fluorure de vinylidène-co-hexafluoropropylène) ayant une teneur en hexafluoropropylène de < 15 % en poids.

**7.** Composition de moulage thermoplastique selon l'une quelconque des revendications 1 à 6, un copolymère greffé (A) étant obtenu par polymérisation en émulsion de styrène et d'acrylonitrile en un rapport en poids de 80 : 20 à 65 : 35, préférablement 74 : 26 à 70 : 30, pour obtenir une gaine de greffage (A2), en la présence d'au moins un latex de caoutchouc de butadiène aggloméré (A1) doté d'un diamètre médian de particule en poids $D_{50}$ de 200 à 600 nm, préférablement 250 à 500 nm.

**8.** Composition de moulage thermoplastique selon l'une quelconque des revendications 1 à 7, le copolymère (B) étant un copolymère de styrène et d'acrylonitrile, en un rapport en poids allant de 78 : 22 à 55 : 45, préférablement 75 : 25 à 65 : 35 et ayant une masse molaire moyenne en poids $M_w$ de 90 000 à 160 000 g/mole, préférablement 110 000 à 140 000 g/mole.

**9.** Composition de moulage thermoplastique selon l'une quelconque des revendications 1 à 8, le composant (D) étant un lubrifiant, un agent de piégeage d'acide, un antioxydant, une huile de silicone, un stabilisant et/ou un agent interfacial.

**10.** Procédé pour la préparation de la composition de moulage thermoplastique selon l'une quelconque des revendications 1 à 9 par mélange en fusion des composants (A), (8), (C) et (D) à des températures dans la plage allant de 160 °C à 320 °C.

**11.** Article façonné comprenant la composition de moulage thermoplastique selon l'une quelconque des revendications 1 à 9.

**12.** Utilisation d'une composition de moulage thermoplastique selon l'une quelconque des revendications 1 à 9 ou d'un article façonné selon la revendication 11 pour des applications de peinture ou de placage, en particulier de galvanoplastie.

**13.** Article façonné selon la revendication 11, la surface duquel étant au moins partiellement ou préférablement totalement peinte ou plaquée, en particulier galvanisée, avec un ou plusieurs métaux.

**14.** Article façonné selon la revendication 13 obtenu par un procédé de galvanoplastie dont la surface est, préférablement totalement, plaquée avec une ou plusieurs couches d'un ou plusieurs métaux choisis parmi le cuivre, le nickel, le platine, l'or et le chrome.

**15.** Utilisation d'un article façonné selon les revendications 13 ou 14 pour des applications automobiles, ménagères et électroniques.

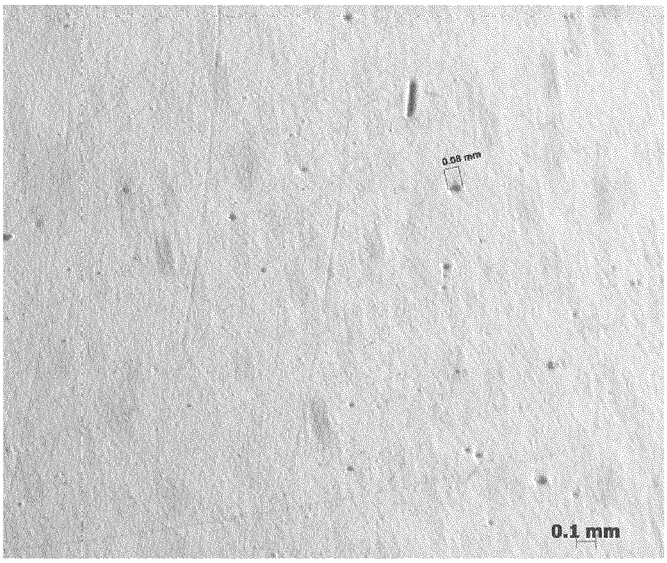


Figure 1

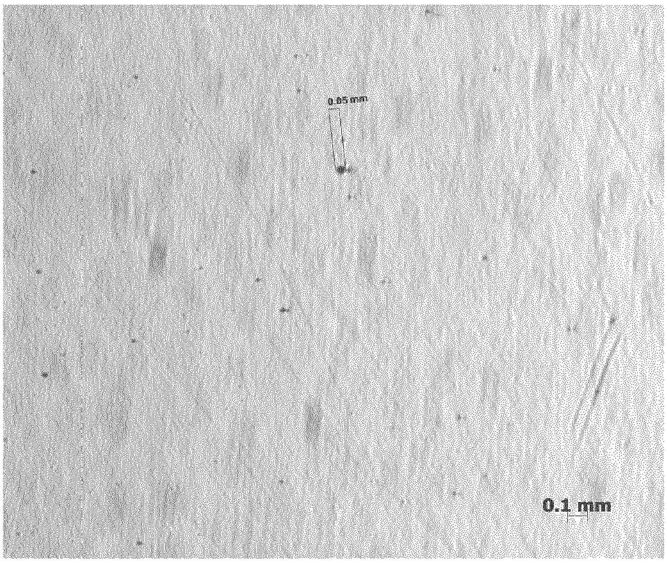


Figure 2

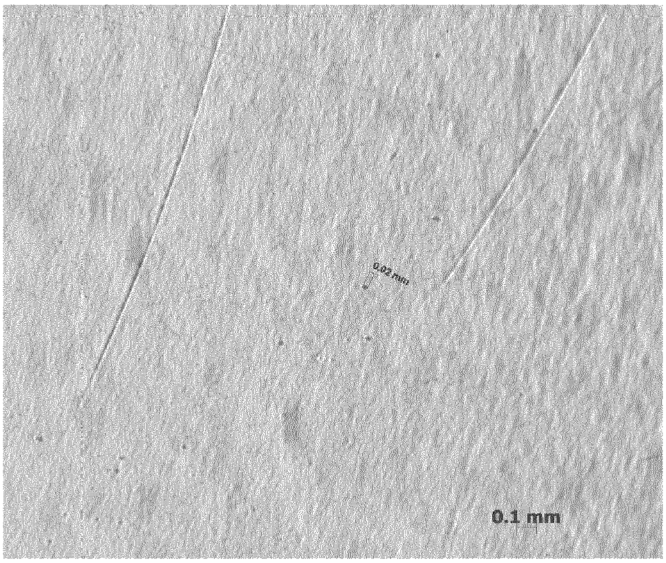


Figure 3

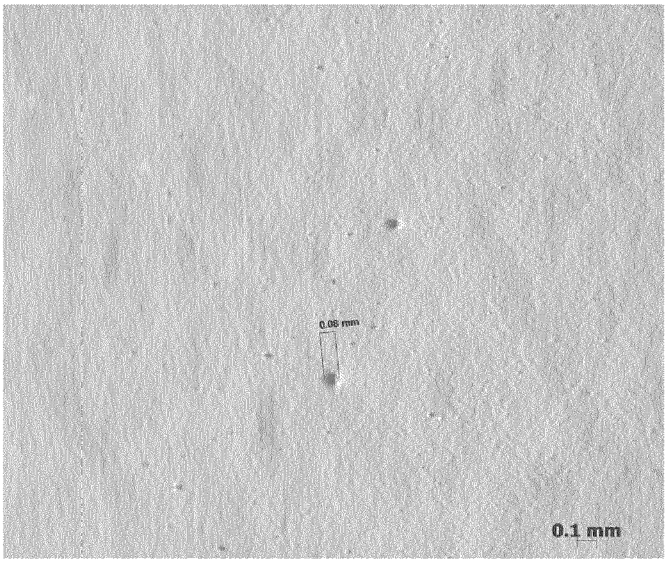


Figure 4

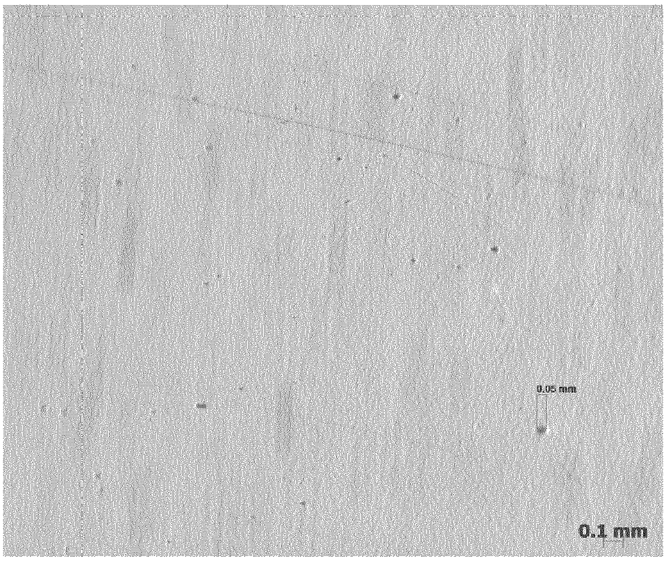


Figure 5

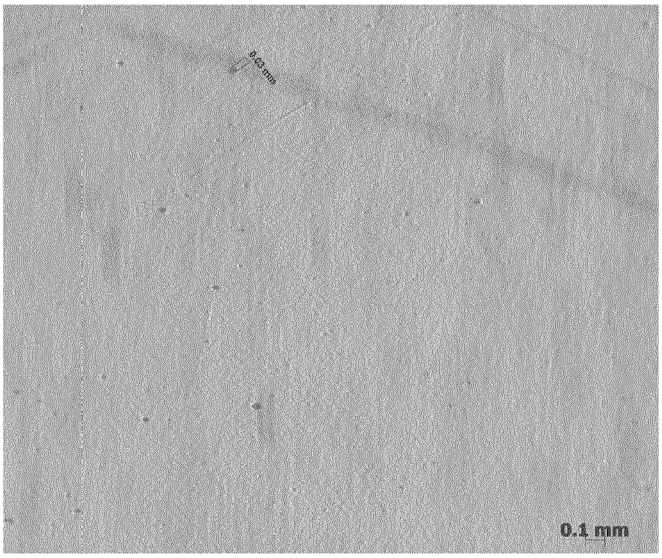


Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20150368463 A
- US 10731031 B
- CN 106189047 A
- CN 103333456 A
- WO 2016184765 A
- WO 2020064594 A
- US 6734252 A
- EP 1462483 A
- US 20100204375 A
- US 20100298487 A
- US 20100298487 A1
- WO 2012022710 A
- WO 2014170406 A
- WO 2014170407 A
- DE 2420358 A
- DE 2724360 A
- DE 19907136 A


### Non-patent literature cited in the description


- Polystyrol [Polystyrene. **VIEWEG-DAUMILLER.** Kunststoff-Handbuch ([Plastics Handbook. Carl-Hanser-Verlag, 1969, vol. 5, 122
- **HANS ZWEIFEL.** Plastics Additives Handbook. Hanser Publ, 2009